# EUROPEAN PATENT SPECIFICATION

(11) **EP 0 856 036 B1**
(45) Date of publication and mention of the grant of the patent: **05.12.2001**
(21) Application number: 96929956.9
(22) Date of filing: 10.09.1996
(51) Int. Cl.: C09J 7/04, B23K 9/32

(54) **PROCESS FOR PROTECTING SURFACES FROM WELD SPATTER AND METAL SPARKS**
VERFAHREN ZUR SCHÜTZEN VON OBERFLÄCHEN GEGEN SCHWEISSSPRITZER ODER METALFUNKEN
PROCEDE DE PROTECTION DE SURFACES CONTRE DES PROJECTIONS DE SOUDURE ET DES ETINCELLES DE METAL

(30) Priority: 19.10.1995 US 545396
(43) Date of publication of application: 05.08.1998
(73) Proprietor: MINNESOTA MINING AND MANUFACTURING COMPANY, St. Paul, Minnesota 55133-3427 (US)
(72) Inventor: LAPPI, Larry, R., Saint Paul, MN 55133-3427 (US)
(74) Representative: Ahner, Francis
(86) International application number: US9614508
(87) International publication number: WO9714758

(56) References cited:
- EP-A- 0 481 634
- US-A- 4 849 273
- PATENT ABSTRACTS OF JAPAN vol. 010, no. 200 (M-498), 12 July 1986 & JP,A,61 042494 (SHIGERU SUSA), 28 February 1986,

## Description

### Background of the Invention

This invention relates to protecting surfaces from weld spatter and metal sparks.

Repairs in automotive body shops frequently involve processes such as abrasive grinding and welding. The metal sparks generated in such processes (e.g., by the friction of an abrasive grinding operation or by micro-explosions caused by rapid heating of metal in the vicinity of the tip of a welding torch or arc) can have initial temperatures ranging from about 2500-3500°C. Welding processes such as Metal Inert Gas (MIG) or wire welding produce weld spatter (e.g., wire fragments and globules of molten metal). Both metal sparks and weld spatter can cause substantial damage to surfaces they contact such as the upholstery, glass, or paint of an automobile, necessitating protective measures. It is particularly difficult to obtain effective, easy-to-apply protection, however, where the surfaces involved are substantially vertical surfaces such as automobile glass and doors.

### Summary of the Invention

In a first aspect, the invention features a method for protecting a surface from the spatter of molten metal or metal sparks during welding or grinding operations comprising the steps of:
removably attaching to said surface a thin sheet having a thickness no greater than 500 micrometers and having a pair of opposed faces, one of which is integrally provided with a pressure sensitive adhesive for removably attaching said sheet to said surface;
conducting welding or grinding operations in the vicinity of said surface; and
removing said sheet from said surface at the conclusion of said welding or grinding operations.

In preferred embodiments, the protective sheet is removably attached to a substantially vertical surface (e.g., a surface in which the magnitude of the component of the surface vector in the direction of gravitational force is greater than about 10% of the magnitude of the surface vector, where "surface vector" refers to the vector lying in the plane defined by the major face of the surface).

Preferred materials for the protective sheet include paper. Particularly preferred paper sheets include sheets having a density of at least about 0.20 g/cm³. Preferred pressure sensitive adhesives include microsphere adhesives (e.g., of the type described in Silver, U.S. 3,691,140 and Baker et al., U.S. 4,166,152, both of which are hereby incorporated by reference). The entire face of the sheet may be integrally provided with the pressure sensitive adhesive. Alternatively, only a portion of the face of the sheet may be provided with the adhesive.

In a second aspect, the invention features a method for protecting a surface from the spatter of molten metal or metal sparks during welding or grinding operations comprising the steps of:
interposing between said surface and a source of molten metal or metal sparks a paper sheet having a thickness no greater than about 500 micrometers , and a density of at least about 0.20 g/cm³; and
conducting welding or grinding operations in the vicinity of said surface.

The invention provides a simple, effective method for protecting surfaces such as automobile windshields, doors, and upholstery from weld spatter and metal sparks encountered during welding and grinding. Although the protective sheets are thin, they provide surprisingly good protection against weld spatter and metal sparks. In addition, it is not necessary to treat the sheets with flame retardants in order to obtain effective protection.

Other features and advantages of the invention will be apparent from the following description of the preferred embodiments thereof, and from the claims.

### Description of the Preferred Embodiments

The invention features the use of thin protective sheets for protecting surfaces from weld spatter and grinding sparks. The invention is particularly useful for protecting substantially vertical surfaces such as automobile windows and upholstery. Suitable sheets for this purpose preferably have a thickness of not greater than about 500 micrometers; even more preferred are sheets having thickness values ranging from about 70 to about 400 micrometers. They may be provided, for example, in the form of rolls, stacked sheets, or folded sheets, with the particular configuration being selected based upon ease of dispensability.

A wide variety of materials may be used for the protective sheet. Examples include paper, paperboard, plastic film (e.g., polyvinyl chloride, polyethylene terephthalate, polyurethane, polyethylene, polyvinyl fluoride, or cellulose acetate), and woven and non-woven fabric sheets (e.g., cotton duck). Paper is particularly preferred because of its relatively low cost and ease of disposability. Particularly preferred are paper sheets having a density greater than about 0.20 g/cm³. The inventors have found that when the density of the paper sheet exceeds about 0.20 g/cm³, the paper, upon contact with weld spatter, tends to char, rather than burn, when in intimate contact with a substrate because there is insufficient oxygen available to support combustion.

Suitable paper sheets are commercially available and include Kraft papers commercially available from a variety of sources, including Mosinee of Appleton, WI, James River Corp. of Parchment, MI, and Research Products Corp. of Madison, WI. If desired, one or more flame retardant ingredients may be incorporated in the sheets. Examples of suitable flame retardant/resistant papers are commerically available from the sources listed above.

The protective sheet is positioned between the surface to be protected and the source of the weld spatter and grinding sparks (e.g., a welding torch or grinder). For example, if the surface to be protected is an automobile window or door, the sheet can be hung in front of the surface just as one would hang a curtain. The sheet can also be attached directly to the surface itself, in which case the sheet is preferably coated on one side with a pressure sensitive adhesive for adhering the sheet to the surface. The adhesive may be provided as a continuous coating covering the entire side of the sheet. Alternatively, it may be provided in the form of a continuous strip running along one or more edges of the sheet, or in the form of a discontinuous coating (e.g., as a series of dots or diamonds).

To prevent blocking of the adhesive, the uncoated side of the protective sheet may be provided with a low adhesion backsize (LAB) coating. Examples of suitable LAB coatings include acrylates (e.g., as disclosed in U.S. Patents 2,607,711 and 3,011,988, hereby incorporated by reference), silicones (e.g., as disclosed in U.S. Patents 4,313,988 and 4,728,571, hereby incorporated by reference), silicone-urea block copolymers (e.g., as disclosed in U.S. Patent 5,290,615, hereby incorporated by reference), and fluorocarbons (e.g., as disclosed in U.S. Patent 3,318,852, hereby incorporated by reference).

The pressure sensitive adhesive, as well as the coating weight and extent of coverage on the protective sheet, is selected such that the protective sheet can be readily removed from the surface to which it is adhered at the conclusion of welding and/or grinding operations. The adhesive may be applied to the sheet in the form of an aqueous-based composition, a solvent-based composition, or a 100% solids composition.

Although a wide variety of conventional pressure sensitive adhesives (e.g., acrylate adhesives) can be used, particularly preferred adhesives include microsphere adhesives, e.g., of the type generally described in Silver, U.S. 3,691,140 and Baker et al., U.S. 4,166,152. Such adhesives are infusible, solvent-dispersible, solvent-insoluble, inherently tacky, elastomeric, polymeric or copolymeric spheres having diameters on the order of about 1 to about 250 microns. They are prepared in an aqueous suspension polymerization process utilizing an emulsifier in an amount greater than the critical micelle concentration. Such microspheres permit bonding of materials such as paper to various substrates, but also permit easy removal of the bonded material without tearing, as well as re-bonding of the material without application of additional adhesive.

The invention will now be described by way of the following examples.

### EXAMPLES

### Test Procedures

The following procedures were used to measure sheet density and to evaluate the performance of various protective sheets when exposed to welding sparks and grinding sparks.

### Sheet Density

Three sheets, each having the same surface area, were weighed to determine an average sheet weight value. The individual sheet thicknesses were measured using a Model #49-62-01 TMI Digital Micrometer from Testing Machines, Inc. of Amityville, NY fitted with 5 cm diameter anvils to provide a dead weight load sufficient to apply a force of 1.44 KPa to the sheet. An average value was then obtained from the three measurements. The average sheet density was determined by dividing the average sheet weight value by the average sheet volume (determined by multiplying the average sheet thickness by the average surface area of the sheet).

### Welding Sparks

A glass test coupon measuring 4 in. x 8 in. (10 cm x 20 cm) was partially covered with a 4 in. x. 4 in. (10 cm x 10 cm) sample of the sheet being tested; the exposed glass surface was used as a control. In the case of pressure sensitive adhesive-containing sheets, the sheet was adhered to the test coupon by means of the pressure sensitive adhesive. In the case of non-pressure sensitive adhesive-containing sheets, one edge of the sheet was taped to the center of the glass coupon using a 2.5 cm wide piece of No. 233 Scotch™ Brand Automotive Refinishing Masking Tape from 3M Co. of St. Paul, MN.

The partially covered test coupon was placed horizontally on a welding blanket of the type described in U.S. Patent 4,849,272, hereby incorporated by reference, and positioned 15 cm beneath a 0.5 m length of a 90° angle iron. A Metal Inert Gas (MIG) wire-fed welding torch (DAN-MEG 140 (195-TTE) welder) was adjusted to maximize the creation of welding sparks by melting a wire onto the angle iron. The wire was a Type SI-4405 Autobody MIG carbon steel welding wire AWS-A5.18, ASME-SFA 5.18 having a diameter of 760 micrometers. The welding torch settings were as follows: wire speed of 4, welding power of 5, and a manual fill setting. The coupon was showered with sparks for 15 seconds; the spark velocity was on the order of 5 m/sec. The exposed glass surface was then compared to both the surface of the protective sheet and the glass surface underlying the protective sheet after cleaning the underlying glass surface with glass cleaner (3M Glass Cleaner #051135-08968 available from 3M Co. of St. Paul, MN). The results from individual protective sheets are shown in Table I, where the following legends apply:
"1" means that char spots and char trails were observed on the sheet surface from the skittering of molten metal sparks, but no pinholes or penetration of the sheet was evident, nor was there any evidence of damage to the underlying glass surface.
"2" means that intense charring/pyrolization of the sheet material and/or partial penetration of the sheet was observed, resulting in smudges on the underlying glass. The smudges, however, could be removed using a commercially available glass cleaner (3M Glass Cleaner #051135-08968 available from 3M Co. of St. Paul, MN). There was no evidence of damage to the glass surface following cleaning.
"3" means that penetration of the sheet occurred, resulting in the formation of pits in the underlying glass surface.

### Grinding Sparks

Samples were prepared as described above in the case of the test procedure for welding sparks. The glass coupon was positioned vertically 15 cm from a 0.5 m length of a 90° angle iron. A Sioux portable electric high speed H.D. sander (catalogue #1267) commercially available from Sioux Tools Inc. of Sioux City, IA was fitted with an 18 cm diameter disc pad (3M brand Paint Buster Disc Pad Assembly #051144-05634 commercially available from 3M Co. of St. Paul, MN) and an 18 cm grinding disc (3M Coated Abrasive Grinding Disc, Grade 24 Green Corps Fibre Disc, #051144-01923 commercially available from 3M Co. of St. Paul, MN). This heavy duty (5000 rpm) abrasive grinding tool was used to grind the end of the angle iron, thereby generating an intense stream of high velocity grinding sparks that were horizontally directed at the vertically positioned test coupon.

The test coupon was exposed to the grinding sparks for 15 seconds; spark velocity was on the order of about 50 m/s. The exposed glass surface was then compared to both the surface of the protective sheet and the glass surface underlying the protective sheet. The results from individual protective sheets are shown in Table I, where the following legends apply:
"1" means no visible penetration of the sheet by metal sparks and no build-up of metal debris on the sheet surface. In some samples, a slight graying of the surface was observed due to slight charring. There was no damage to the underlying glass.
"2" means the sheet surface exhibited distinct speckled charring. There was no visible penetration of the sheet by metal sparks and no build-up of metal debris on the sheet surface. In addition, there was no damage to the underlying glass.
"3" means the sheet material was penetrated by extreme charring or pinholes from grinding sparks. There was no build-up of iron filings and no damage to the underlying glass.
"4" means charring, pinholing, and/or disintegration of the sheet occurred. Pits formed in the underlying glass surface.

### Example 1

The sample was a sheet of Mosinee 107# Natural Tube Winding Kraft paper, Spec. 0635-D (107#/3000 ft²) available from Mosinee of Appleton, WI. The thickness of the sheet measured 260 microns. The average sheet density was 0.67 g/cm³ and the Gurley porosity (supplied by the manufacturer) was 11. The sheet was exposed to welding sparks and grinding sparks, as described in the Test Procedures, above. The results are shown in Table I.

### Example 2

The sample was a sheet of Mosinee 98# Natural Machine Finish Converting Kraft paper, Spec. M-2713 (98#/3000 ft²) available from Mosinee of Appleton, WI. The thickness of the sheet measured 230 microns. The average sheet density was 0.67 g/cm³ and the Gurley porosity (supplied by the manufacturer) was 15-25. The sheet was exposed to welding sparks and grinding sparks, as described in the Test Procedures, above. The results are shown in Table I.

### Example 3

The sample was a sheet of Mosinee 81.5# Natural Tube Winding Kraft paper, Spec. 0789-B (81.5#/3000 ft²) available from Mosinee of Appleton, WI. The thickness of the sheet measured 190 microns. The average sheet density was 0.71 g/cm³ and the Gurley porosity (supplied by the manufacturer) was 90-150. The sheet was exposed to welding sparks and grinding sparks, as described in the Test Procedures, above. The results are shown in Table I.

### Example 4

The sample was a sheet of Mosinee 40# Machine Finish Converting Kraft paper, Spec. 2519-A (40#/3000 ft²) available from Mosinee of Appleton, WI. The thickness of the sheet measured 90 microns. The average sheet density was 0.71 g/cm³ and the Gurley porosity (supplied by the manufacturer) was 28. The sheet was exposed to welding sparks and grinding sparks, as described in the Test Procedures, above. The results are shown in Table I.

### Example 5

The sample was a sheet of Mosinee 109# Natural Partial Flame Resistant Kraft paper, Spec. 2377 (109#/3000 ft²) available from Mosinee of Appleton, WI. The thickness of the sheet measured 300 microns. The average sheet density was 0.59 g/cm³ and the Gurley porosity (supplied by the manufacturer) was 12. The sheet was exposed to welding sparks and grinding sparks, as described in the Test Procedures, above. The results are shown in Table I.

### Example 6

The sample was a sheet of Mosinee 100# CW White Bleached Flame Resistant Kraft paper, Spec. 2459 (100#/3000 ft²) available from Mosinee of Appleton, WI. The thickness of the sheet measured 270 microns. The average sheet density was 0.61 g/cm³ and the Gurley porosity (supplied by the manufacturer) was 22. The sheet was exposed to welding sparks and grinding sparks, as described in the Test Procedures, above. The results are shown in Table I.

### Example 7

The sample was a sheet of Mosinee 80# Natural Utility Flame Resistant Kraft paper, Spec. 2027-A (80#/3000 ft²) available from Mosinee of Appleton, WI. The thickness of the sheet measured 205 microns. The average sheet density was 0.65 g/cm³ and the Gurley porosity (supplied by the manufacturer) was 15-25. The sheet was exposed to welding sparks and grinding sparks, as described in the Test Procedures, above. The results are shown in Table I.

### Example 8

The sample was a sheet of Mosinee 40# Natural Utility Flame Resistant Kraft paper, Spec. 1564-F (40#/3000 ft²) available from Mosinee of Appleton, WI. The thickness of the sheet measured 110 microns. The average sheet density was 0.59 g/cm³ and the Gurley porosity (supplied by the manufacturer) was 10-25. The sheet was exposed to welding sparks and grinding sparks, as described in the Test Procedures, above. The results are shown in Table I.

### Example 9

The sample was a sheet of Mosinee 41# Natural Utility Flame Resistant Kraft paper, Spec. 1970-A (41#/3000 ft²) available from Mosinee of Appleton, WI. The thickness of the sheet measured 100 microns. The average sheet density was 0.70 g/cm³ and the Gurley porosity (supplied by the manufacturer) was 16-30. The sheet was exposed to welding sparks and grinding sparks, as described in the Test Procedures, above. The results are shown in Table I.

### Example 10

The sample was a sheet of Pepperell Spark Guard Boothliner Flame Resistant Kraft paper (54#/3000 ft²) available from Pepperell of Pepperell, MA. The thickness of the sheet measured 175 microns. The average sheet density was 0.64 g/cm³. The sheet was exposed to welding sparks and grinding sparks, as described in the Test Procedures, above. The results are shown in Table I.

### Example 11

The sample was a sheet of Booth Floor Kraft paper, stock #3041 available from Research Products Corp. of Madison, WI. The thickness of the sheet measured 210 microns. The average sheet density was not determined due to limited availability of samples. The sheet was exposed to welding sparks and grinding sparks, as described in the Test Procedures, above. The results are shown in Table I.

### Example 12

The sample was a sheet of 55# Flame Resistant Kraft Kraft paper (03965) (55#/3000 ft²) available from James River Corp. of Parchment, MI. The thickness of the sheet measured 120 microns. The average sheet density was 0.77 g/cm³. The sheet was exposed to welding sparks and grinding sparks, as described in the Test Procedures, above. The results are shown in Table I.

### Example 13

The sample was a sheet of 30# Kraft paper treated with Pyrofas 7202 available from Fire & Thermal Protection, Inc. of Carmel, CA. The thickness of the sheet measured 130 microns. The average sheet density was not determined due to limited availability of samples. The sheet was exposed to welding sparks and grinding sparks, as described in the Test Procedures, above. The results are shown in Table I.

### Example 14

The sample was a piece of Post-It™ Brand Cover Up Tape commercially available from 3M Co. of St. Paul, MN. The thickness of the sheet measured 95 microns (including the adhesive). The average sheet density was 0.85 g/cm³. The sheet was exposed to welding sparks and grinding sparks, as described in the Test Procedures, above. The results are shown in Table I.

### Example 15

The sample was a piece of Safe Release™ Masking Tape #2075 commercially available from 3M Co. of St. Paul, MN. The thickness of the sheet measured 115 microns (including adhesives). The average sheet density was 0.75 g/cm³. The sheet was exposed to welding sparks and grinding sparks, as described in the Test Procedures, above. The results are shown in Table I.

**TABLE I**

| | | |
|---|---|---|
| Example | | |

| | Weld | Grind |
|---|---|---|
| 1 | 1 | 1 |
| 2 | 2 | 1 |
| 3 | 3 | 1 |
| 4 | 2 | 1 |
| 5 | 2 | 1 |
| 6 | 1 | 1 |
| 7 | 2 | 1 |
| 8 | 2 | 1 |
| 9 | 1 | 4 |
| 10 | 1 | 1 |
| 11 | 1 | 1 |
| 12 | 1 | 1 |
| 13 | 1 | 4 |
| 14 | 1 | 1 |
| 15 | 1 | 1 |

Other embodiments are within the following claims.

## Claims

1. A method for protecting a surface from the spatter of molten metal or metal sparks during welding or grinding operations comprising the steps of:
removably attaching to said surface a thin sheet having a thickness no greater than 500 micrometers and having a pair of opposed faces, one of which is integrally provided with a pressure sensitive adhesive for removably attaching said sheet to said surface ;
conducting welding or grinding operations in the vicinity of said surface; and
removing said sheet from said surface at the conclusion of said welding or grinding operations.

2. A method according to claim 1 comprising integrally providing said face of said sheet with a pressure sensitive adhesive comprising a microsphere adhesive.

3. A method for protecting a surface from the spatter of molten metal or metal sparks during welding or grinding operations comprising the steps of:
interposing between said surface and a source of molten metal or metal sparks a paper sheet having a thickness no greater than about 500 micrometers , and a density of at least about 0.20 g/cm³; and
conducting welding or grinding operations in the vicinity of said surface.

## Patentansprüche

1. Verfahren zum Schützen einer Oberfläche vor Spritzern geschmolzenen Metalls oder Metallfunken während Schweiß- oder Schleifvorgängen mit den Schritten:
abnehmbares Anbringen einer dünnen Schicht mit einer Dicke von höchstens 500 Mikrometern und mit einem Paar entgegengesetzter Flächen an die Oberfläche, wobei eine Fläche integriert mit einem druckempfindlichen Klebstoff zum abnehmbaren Anbringen der Schicht an der Oberfläche versehen ist,
Ausführen von Schweiß- oder Schleifvorgängen in der Nähe der Oberfläche und
Entfernen der Schicht von der Oberfläche beim Abschluß der Schweiß- oder Schleifvorgänge.

2. Verfahren nach Anspruch 1, welches das integrierte Versehen der Fläche der Schicht mit einem druckempfindlichen Klebstoff aufweist, der einen Mikrokügelchen-Klebstoff einschließt.

3. Verfahren zum Schützen einer Oberfläche vor Spritzern geschmolzenen Metalls oder Metallfunken während Schweiß- oder Schleifvorgängen mit den Schritten:
Einfügen einer Papierschicht mit einer Dicke von höchstens etwa 500 Mikrometern und einer Dichte von mindestens etwa 0,20 g/cm³ zwischen der Oberfläche und einer Quelle geschmolzenen Metalls oder Metallfunken und
Ausführen von Schweiß- oder Schleifvorgängen in der Nähe der Oberfläche.

## Revendications

1. Procédé de protection d'une surface contre les projections de métal fondu ou les étincelles de métal pendant les opérations de soudure ou de meulage comprenant les étapes consistant :
à fixer à ladite surface de manière amovible une feuille mince ayant une épaisseur non supérieure à 500 micromètres et ayant deux faces opposées, dont l'une est couverte intégralement avec un adhésif sensible à la pression pour fixer ladite feuille à ladite surface de manière amovible ;
à conduire les opérations de soudure ou d'abrasion au voisinage de ladite surface ; et à enlever ladite feuille de ladite surface à la fin desdites opérations de soudure ou de meulage.

2. Procédé selon la revendication 1 comprenant l'opération consistant à déposer intégralement sur ladite face de ladite feuille un adhésif sensible à la pression comprenant un adhésif à microsphères.

3. Procédé pour la protection d'une surface contre les projections de métal fondu ou les étincelles de métal pendant les opérations de soudure ou de meulage comprenant les étapes consistant :
à interposer entre ladite surface et une source de métal fondu ou d'étincelles de métal une feuille de papier ayant une épaisseur non supérieure à environ 500 micromètres, et une masse volumique d'au moins environ 0,20 g/cm³ ; et
à conduire les opérations de soudure ou d'abrasion au voisinage de ladite surface.
